# EUROPEAN PATENT APPLICATION

(11) **EP 1 592 148 A1**
(43) Date of publication of application: **02.11.2005**
(21) Application number: 05252354.5
(22) Date of filing: 15.04.2005
(51) Int. Cl.: H04B 7/06, H04L 5/14, H04Q 7/38, H01Q 3/26, H04Q 7/36

(54) **Band switching for coherent beam forming in full-duplex wireless communication**

(30) Priority: 30.04.2004 US 836085
(71) Applicant: LUCENT TECHNOLOGIES INC., Murray Hill, New Jersey 07974-0636 (US)
(72) Inventor: Bosch, Peter, New Providence, NJ 07974 (US); Mullender, Sap J., North Plainfield, NJ 07062 (US)
(74) Representative: Sarup, David Alexander

(57) **Abstract**

Bidirectional wireless communication is advantageously achieved by using at least two frequency bands, wherein during a first time period a first one of the frequency bands is used for signal transmission (e.g., downlink) while a second one of the frequency bands is used for signal reception (e.g., uplink), and during a second time period (subsequent to the first time period) the first one of the frequency bands is used for signal reception (e.g., uplink) while the second one of the frequency bands is used for signal transmission (e.g., downlink). By alternating the use of the two frequency bands repeatedly between signal transmission and signal reception throughout the communication, overall communication efficiency is improved and latency times considerably reduced, particularly when implemented in a system having multiple antennas (i.e., antenna arrays) and employing coherent beam forming and antenna diversity.

## Description

### Field of the Invention

The present invention relates generally to the field of wireless communication systems using multiple antenna structures and more particularly to a method and apparatus for enhancing the efficiency of such systems by employing band switching of multiple frequency bands to provide full-duplex wireless communications.

### Background of the Invention

As is well known in the wireless (e.g., cellular) communications art, multiple antennas at a base station advantageously allows the base station to use antenna diversity to receive multiple packets from multiple locations simultaneously and to use beam forming to send multiple packets to multiple locations. As is also known to those skilled in the art, beam forming and antenna diversity involve using a plurality of antennas to transmit or receive signals towards or from a particular direction, thereby enabling the simultaneous handling of multiple mobile devices (e.g., cellular telephones).

In particular, as is well known to those skilled in the art, beam forming advantageously causes an intended recipient to receive a signal from multiple antennas in constructive interference. And when using beam forming techniques, it is also advantageous to send "null" signals (or "nulls" for short), causing all but the intended recipient in a set of recipients to receive no signal, due to destructive interference. (Note that sending "nulls" is essentially the "dual" technique to the technique of beam forming.) Thus, it is typical that such a multiple antenna system, when transmitting messages, superimposes a group of messages to be sent, one for each recipient, and then transmits them in such a manner so that each recipient can more easily decode the intended message. Nonetheless, as used herein, the term "beam forming" will refer to the technique of employing either constructive interference, destructive interference, or a combination of both constructive and destructive interference to send a signal to a given recipient, avoid sending a signal to one or more recipients, or both.

Through such beam forming and antenna diversity techniques, it is often in fact possible to send and receive as many as five to eight packets simultaneously. Thus, if a single antenna could manage a throughput of, for example, 2 Mbps (million bits per second), four antennas using five beams might be able to carry as much as 10 Mbps. (In practice, however, some of the time fewer parallel streams can be used, typically limiting the aggregate throughput to a number somewhat less than that.)

As is also known by those skilled in the art, coherent beam forming *(e.g.,* by a base station) may be advantageously achieved by knowing the phase shifts and amplitude adjustments that need to be made to each of the antennas to optimally "beam" a signal to, for example, a given mobile device (and/or to optimally create "null" signals for one or more other mobile devices). In one approach, such knowledge of the needed phase shifts and amplitudes is gathered through trial and error - for example, the base station might adjust the phase and amplitude parameters and then the mobile device would report received signal-to-noise ratios back to the base station. However, searching the parameter space in this manner is a tedious process and one that is not likely to be robust to changing channel conditions, as often occur, for example, as a result of physical movement of the mobile devices.

In a more useful approach, the phase and amplitude parameters are determined by having the base station measure phase and amplitude information on the reverse link. In typical prior art full-duplex *(i.e.,* simultaneous two-way bidirectional) communications systems, however, the reverse link is in a different frequency band than the forward link. Since the multipath *(i.e.,* signal bounce) characteristics of different frequencies are likely to be quite different, the parameters measured on the reverse link usually do not work well on the forward link.

Thus, the better way to measure phases and amplitudes for use in coherent beam forming is to use the same frequency band for both reception and transmission. The parameters measured on the uplink channel *(e.g.,* from mobile to base station) can then be advantageously used in the downlink channel *(e.g.,* from base station to mobile) with excellent results. However, an antenna or an antenna array cannot be used for both transmission and reception in one frequency band at the same time (since the receiver will obviously be "fried" by the relatively powerful transmitter). Nor can a base station or a mobile device use different antennas for reception than for transmission, as this would render the measurements not particularly relevant.

One well known solution to this problem is to use a single frequency band in half-duplex (*i.e.,* one way communication at a time) mode. In particular, when the given frequency band is being used as an uplink band, the channel is measured by the base station and the resulting phases and amplitudes can be applied to the antenna array to turn it into a directional receive antenna array. Then, the channel can be reversed, and the same phases and amplitudes may be advantageously applied to create a directional antenna array for transmission (resulting in coherent beam forming). (Note that such measured phase and amplitude information is referred to generically as channel state information.)

However, turning a channel around from transmitter to receiver, for example, is often an expensive (*i.e*., time consuming) undertaking - the transmitter needs to be turned off, and only when it is fully "off" can the receiver be turned on. (Note that the higher the power of the transmitter, the longer it takes to turn it off - the power needs to be "drained.") This relatively long turn-around time for the amplifier and antenna systems causes the throughput of the system to decrease with increasing turn-around frequency.

In addition, one particularly critical problem resulting from the half-duplex nature of such coherent beam approaches is that it causes latencies to become longer - if a packet is lost in one direction, for example, the feedback necessary to cause a retransmission must wait until after the next channel switch, and the retransmission of the data cannot occur any sooner than after the next channel switch after that. And switching at higher frequencies is not a viable solution due to the aforementioned "dead" time (*i*.*e*., the turn-around time) during switching. In particular, typical roundtrip-latency requirements (*e.g*., to handle such retransmissions in the presence of transmission errors) typically call for a turn-around frequency of perhaps 500 Hertz (cycles per second). Thus, the long turn-around times inherent in this half-duplex approach to coherent beam forming cause channel utilization to drop significantly and make it difficult to achieve the given latency requirements.

### Summary of the Invention

The present invention may be advantageously employed to alleviate the above-described limitations of prior art approaches to coherent beam forming in wireless (e.g., cellular) communications networks using antenna arrays (i.e., multiple antennas). In accordance with the principles of the present invention, bidirectional wireless communication is advantageously achieved by using at least two frequency bands, wherein during a first time period a first one of the frequency bands is used for signal transmission (e.g., downlink) while a second one of the frequency bands is used for signal reception (e.g., uplink), and during a second time period (subsequent to the first time period) the first one of the frequency bands is used for signal reception (e.g., uplink) while the second one of the frequency bands is used for signal transmission (e.g., downlink).

In accordance with one illustrative embodiment of the present invention, the use of the two aforementioned frequency bands alternate repeatedly between signal transmission and signal reception throughout the communication. Such a use of two distinct frequency bands - one for transmission and one for reception, repeatedly switching the respective uses of the two bands - advantageously improves overall communication efficiency and reduces latency times considerably, particularly when implemented in a system having antenna arrays and employing coherent beam forming.

### Brief Description of the Drawings

Figure 1 shows a flowchart of a method of performing bidirectional wireless communication with two frequency bands in accordance with a first illustrative embodiment of the present invention.
Figure 2 shows an illustrative time line showing a sample operation of the method of performing bidirectional wireless communication with .two frequency bands in accordance with the first illustrative embodiment of the present invention as shown in Figure 1.
Figure 3 shows a flowchart of a method of performing bidirectional wireless communication with three frequency bands in accordance with a second illustrative embodiment of the present invention.
Figure 4 shows an illustrative time line showing a sample operation of the illustrative method of performing bidirectional wireless communication with three frequency bands in accordance with the second illustrative embodiment of the present invention as shown in Figure 3.

### Detailed Description of the Preferred Embodiments

### A first illustrative embodiment of the invention using two frequency bands

In accordance with a first illustrative embodiment of the present invention, two frequency bands (which will be referred to herein as bands A and B) are employed. But in accordance with the principles of the present invention and in accordance with the first illustrative embodiment thereof, the use of these two frequency bands - which will be referred to herein as band A and band B - are advantageously switched between signal transmission and signal reception on a periodic basis, thereby allowing the use of coherent beam forming in combination with fast retransmission capability and low latency.

In accordance with the first illustrative embodiment of the present invention, band A and band B are advantageously separated in frequency so that base stations and mobile devices can simultaneously use one band for transmission and the other for reception without interference therebetween. Illustratively, a separation of at least 60 MHz (Megahertz or million cycles per second) between band A and band B is preferred. Also, illustratively, band A is used initially as a downlink band *(e.g.,* for signal transmission from a base station to one or more mobile devices), while band B is used initially as an uplink band *(e.g.,* for signal reception by the base station from the mobile devices). In accordance with the first illustrative embodiment of the present invention, as packets arrive on the uplink band, the base station advantageously measures channel conditions and beam-forming parameters *(e.g.,* phases and amplitudes) for each transmitting client *(e.g.,* mobile device), and then stores them for later use.

Then, repeatedly at a predetermined interval - illustratively, for example, twice every two milliseconds - the functions of band A and band B are advantageously reversed. That is, if band A had previously been a downlink band and band B had previously been an uplink band, then band A becomes an uplink band and band B becomes a downlink band at each such reversal. If, on the other hand, band B had previously been a downlink band and band A had previously been an uplink band, then band B becomes an uplink band and band A becomes a downlink band at each such reversal.

After each such reversal, the base station advantageously begins to apply the measurements from the previous band allocation period to beam forming for the current band allocation. In addition, the base station begins measuring the parameters in the uplink band in the current allocation period for use in the next allocation period.

Within a given channel uplink/downlink allocation, the two bands may be advantageously used in a "slotted" fashion. That is, they may be time-division multiplexed. (Time-division multiplexing techniques are fully familiar to those of ordinary skill in the art.) Illustratively, these time slots may, for example, be on the order of 100-200 *µ*s (microseconds, or millionths of a second).

Bands A and B may each be further divided into a small number of *(e.g.,* low-bandwidth) control channels and one or more *(e.g.,* high bandwidth) data channels. These channels may then advantageously be separated using code-division multiplexing or by other known means of creating sub-channels within a given frequency band. (Code-division multiplexing techniques, as well as a number of other means of creating such sub-channels within a given frequency band, are each fully familiar to those of ordinary skill in the art.) Moreover, if multiple data channels are employed, the number and bandwidth thereof may advantageously be allocated dynamically.

Moreover, within each time slot and within each code, more than one packet can advantageously be received in the uplink (with use of antenna diversity effectuated by the existence of multiple antennas), and more than one packet can be sent in the downlink (with use of beam forming also effectuated by the existence of multiple antennas). This will be referred to herein as "beam-forming multiplexing."

In accordance with one illustrative embodiment of the present invention, the transmission and reception of multiple data packets within one time interval *(i.e.,* within a given channel uplink/downlink allocation) advantageously allows for an efficient mechanism to provide feedback *(e.g.,* indicating the failure to have correctly received a packet) and, if necessary, retransmission of data. That is, unlike in the prior art approach where a single frequency band is used alternatively for transmission and reception (see Background of the Invention section, above), the failure of a mobile device (for example) to correctly receive a packet transmitted by a base station (for example) can be quickly rectified *(i.e.,* within the given time interval of the given channel uplink/downlink allocation) by an essentially immediate retransmission of the given packet. (It is not necessary to wait for the link to "turn around.") More particularly, in accordance with one illustrative embodiment of the present invention, an Automatic Repeat Request (ARQ) scheme may be advantageously employed in a very efficient manner *(i.e.,* within a single time interval). (ARQ schemes are well known and fully familiar to those of ordinary skill in the art.)

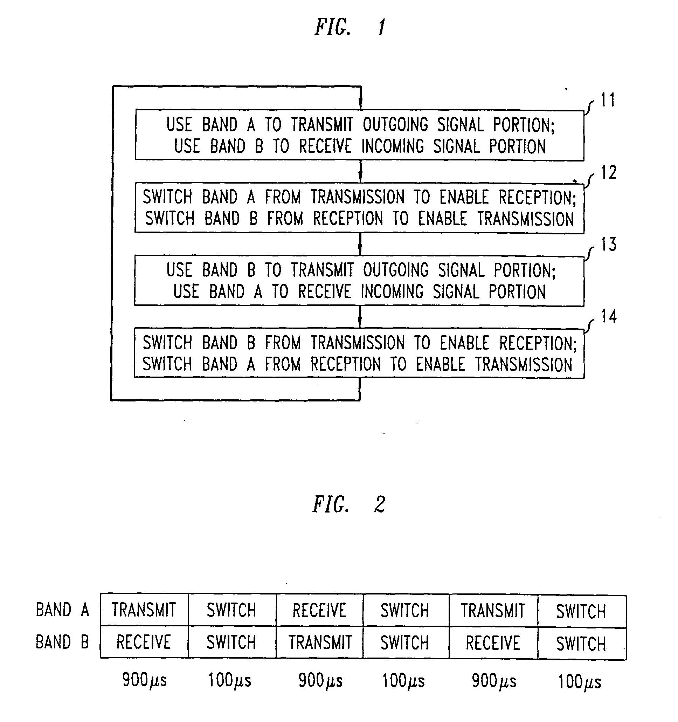

Figure 1 shows a flowchart of a method of performing bidirectional wireless communication with two frequency bands in accordance with a first illustrative embodiment of the present invention. The illustrative method of Figure 1 may, for example, be advantageously employed by a wireless *(e.g.,* cellular) communications system base station. Two distinct frequency bands - designated band A and band B - are employed by the illustrative method.

Referring to the figure, block 11 of the flowchart shows using frequency band A to transmit an outgoing signal portion *(e.g.,* to one or more mobile devices), while simultaneously using frequency band B to receive an incoming signal portion *(e.g.,* from the one or more mobile devices). In block 12 of the flowchart, the transmission over band A is terminated to enable reception over band A, while the reception over band B is simultaneously terminated to enable transmission over band B.

Then, in block 13 of the flowchart, frequency band A is used to transmit another outgoing signal portion, while simultaneously, frequency band B is used to receive another incoming signal portion. Next, in block 14 of the flowchart, the transmission over band B is terminated to enable reception over band B, while the reception over band A is simultaneously terminated to enable transmission over band A. Finally, flow continues back to block 11. This repetitive process continues for as long as there is communication *(e.g.,* between the base station and one or more mobile devices) taking place.

Figure 2 shows an illustrative time line showing a sample operation of the method of performing bidirectional wireless communication with two frequency bands in accordance with the first illustrative embodiment of the present invention as shown in Figure 1. As can be seen in the figure, during a first time slot - illustratively lasting 900 µs (microseconds) - frequency band A is used to transmit an outgoing signal portion, while frequency band B is simultaneously used to receive an incoming signal portion. That is, if the illustrative method is being performed by, for example, a base station, frequency band A is being used as a downlink (base station to mobile devices) channel while frequency band B is being used as an uplink (mobile devices to base station) channel. Then, during a next time slot - illustratively lasting 100 µs (microseconds) - frequency band A is switched from a transmitting mode to enable reception of an incoming signal over band A, while frequency band B is simultaneously switched from a receiving mode to enable transmission of an outgoing signal over band B.

Then, as further shown in the figure, during a next time slot - again, illustratively lasting 900 µs (microseconds) - frequency band B is used to transmit an outgoing signal portion, while frequency band A is simultaneously used to receive an incoming signal portion. And then, during a next time slot - again, illustratively lasting 100 µs (microseconds) - frequency band B is switched from a transmitting mode to enable reception of an incoming signal over band B, while frequency band A is simultaneously switched from a receiving mode to enable transmission of an outgoing signal over band A. This pattern repeats indefinitely for as long as there is communication *(e.g.,* between the base station and one or more mobile devices) taking place.

### A second illustrative embodiment of the invention using three frequency bands

In accordance with a second illustrative embodiment of the present invention, three frequency bands (which will be referred to herein as bands A, B and C) are employed. Referring back to the characteristics of the above-described first illustrative embodiment of the invention, it is noted that there is some amount of time required to effectuate the uplink/downlink channel reversal. Obviously, during this switching time no signal transmission or signal reception will occur.

Thus, in accordance with the second illustrative embodiment of the present invention, a three-band scheme is advantageously employed. In particular, one of the three channels is used as an uplink channel, one is used as a downlink channel, and the third is advantageously used to switch from one to the other *(i.e.,* uplink to downlink or downlink to uplink). Then, as soon as the switching of the third channel is complete, another channel can begin switching while the third channel takes over the previous function of this other channel *(i.e.,* the one that is now switching).

In this manner, there is advantageously essentially no time when transmission and reception cannot occur, since while one channel is switching, the other two channels provide a working uplink channel and a working downlink channel. Note that measurements of the channel parameters will always be no more than three slots old. Each slot is advantageously long enough to turn off the transmitter and switch on the receiver and *"vice versa."* Finally, the channel-switching slots can advantageously be further divided into "mini-slots" to provide latency which is even better than the channel-switch time.

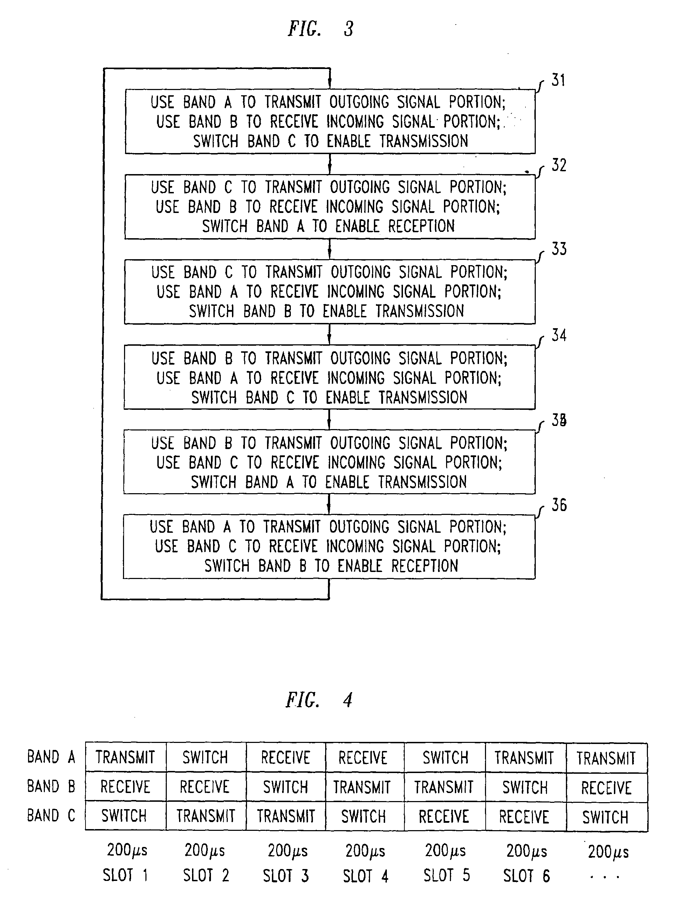

Figure 3 shows a flowchart of a method of performing bidirectional wireless communication with three frequency bands in accordance with a second illustrative embodiment of the present invention. The illustrative method of Figure 3 may, for example, be advantageously employed by a wireless *(e.g.,* cellular) communications system base station. Three distinct frequency bands - designated band A, band B and band C - are employed by the illustrative method.

Referring to the figure, block 31 of the flowchart shows frequency band A being used to transmit an outgoing signal portion *(e.g.,* to one or more mobile devices), while simultaneously, frequency band B is used to receive an incoming signal portion *(e.g.,* from the one or more mobile devices). In addition, as also shown in block 31, band C is at the same time being switched (from receiving an incoming signal) to enable transmission (of an outgoing signal) over band C.

Next, as shown in block 32 of the flowchart, frequency band C (which has been enabled for transmission) is now used to transmit another outgoing signal portion, while simultaneously, frequency band B continues to be used to receive another incoming signal portion. In addition, as also shown in block 32, frequency band A is at the same time being switched (from transmitting an outgoing signal) to enable reception (of an incoming signal) over band A.

Next, as shown in block 33 of the flowchart, frequency band.C continues to transmit another outgoing signal portion, while simultaneously, frequency band A is used to receive another incoming signal portion. In addition, as also shown in block 33, frequency band B is at the same time being switched (from receiving an incoming signal) to enable transmission (of an outgoing signal) over band B.

Next, as shown in block 34 of the flowchart, frequency band B is used to transmit another outgoing signal portion, while simultaneously, frequency band A continues to be used to receive another incoming signal portion. In addition, as also shown in block 34, frequency band C is switched (from transmitting an outgoing signal) to enable reception (of an incoming signal) over band C.

Next, as shown in block 35 of the flowchart, frequency band B continues to transmit another outgoing signal portion, while simultaneously, frequency band C is used to receive another incoming signal portion. In addition, as also shown in block 35, frequency band A is at the same time being switched (from receiving an incoming signal) to enable transmission (of an outgoing signal) over band A.

Next, as shown in block 36 of the flowchart, frequency band A is used to transmit another outgoing signal portion, while simultaneously, frequency band C continues to be used to receive another incoming signal portion. In addition, as also shown in block 36, frequency band B is switched (from transmitting an outgoing signal) to enable reception (of an incoming signal) over band B.

Finally, flow continues back to block 31. This repetitive process continues for as long as there is communication *(e.g.,* between the base station and one or more mobile devices) taking place.

Figure 4 shows an illustrative time line showing a sample operation of the illustrative method of performing bidirectional wireless communication with three frequency bands in accordance with the second illustrative embodiment of the present invention as shown in Figure 3. As can be seen in the figure, during a first time slot - illustratively lasting 200 µs (microseconds) - frequency band A is used to transmit an outgoing signal portion, while frequency band B is simultaneously used to receive an incoming signal portion. That is, if the illustrative method is being performed by, for example, a base station, frequency band A is being used as a downlink (base station to mobile devices) channel while frequency band B is being used as an uplink (mobile devices to base station) channel. Simultaneously, however - *i.e.,* within the same first time slot - frequency band C is being switched (from receiving an incoming signal) to enable transmission (of an outgoing signal) over band C.

Then, during a second time slot - again, illustratively lasting 200 µs (microseconds) - frequency band C is used to transmit an outgoing signal portion, while simultaneously, frequency band B continues to be used to receive an incoming signal portion. And simultaneously - *i.e.,* within the same time slot - frequency band A is being switched (from transmitting an outgoing signal) to enable reception (of an incoming signal) over band A.

Then, as further shown in the figure, during a third time slot - again, illustratively lasting 200 *µ*s (microseconds) - frequency band C continues to be used to transmit an outgoing signal portion, while frequency band A is simultaneously used to receive an incoming signal portion. And simultaneously - *i.e.,* within the same time slot - frequency band B is being switched (from receiving an incoming signal) to enable transmission (of an outgoing signal) over band B.

Then, during a fourth time slot - again, illustratively lasting 200 µs (microseconds) - frequency band B is used to transmit an outgoing signal portion, while simultaneously, frequency band A continues to be used to receive an incoming signal portion. And simultaneously - *i.e*., within the same time slot - frequency band C is being switched (from transmitting an outgoing signal) to enable reception (of an incoming signal) over band C.

Then, as further shown in the figure, during a fifth time slot - again, illustratively lasting 200 µs (microseconds) - frequency band B continues to be used to transmit an outgoing signal portion, while frequency band C is simultaneously used to receive an incoming signal portion. And simultaneously - *i.e.,* within the same time slot - frequency band A is being switched (from receiving an incoming signal) to enable transmission (of an outgoing signal) over band B.

And finally, during a sixth time slot - again, illustratively lasting 200 µs (microseconds) - frequency band A is used to transmit an outgoing signal portion, while simultaneously, frequency band C continues to be used to receive an incoming signal portion. And simultaneously - *i.e*., within the same time slot - frequency band B is being switched (from transmitting an outgoing signal) to enable reception (of an incoming signal) over band C. This pattern repeats indefinitely for as long as there is communication *(e.g.,* between the base station and one or more mobile devices) taking place.

### Addendum to the detailed description

It should be noted that all of the preceding discussion merely illustrates the general principles of the invention. It will be appreciated that those skilled in the art will be able to devise various other arrangements, which, although not explicitly described or shown herein, embody the principles of the invention, and are included within its spirit and scope. Furthermore, all examples and conditional language recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. It is also intended that such equivalents include both currently known equivalents as well as equivalents developed in the future - i.e., any elements developed that perform the same function, regardless of structure.

Thus, for example, it will be appreciated by those skilled in the art that any flow charts, flow diagrams, state transition diagrams, pseudocode, and the like represent various processes which may be substantially represented in computer readable medium and so executed by a computer or processor, whether or not such computer or processor is explicitly shown. Thus, the blocks shown, for example, in such flowcharts may be understood as potentially representing physical elements, which may, for example, be expressed in the instant claims as means for specifying particular functions such as are described in the flowchart blocks. Moreover, such flowchart blocks may also be understood as representing physical signals or stored physical data, which may, for example, be comprised in such aforementioned computer readable medium such as disc or semiconductor storage devices.

## Claims

1. A method of performing bidirectional wireless communication with use of at least two distinct frequency bands, the method comprising the steps of:
(i) transmitting a first outgoing signal portion over a first one of said at least two distinct frequency bands during a first time interval;
(ii) receiving a first incoming signal portion over a second one of said at least two distinct frequency bands during said first time interval;
(iii) transmitting a second outgoing signal portion over the second one of said at least two distinct frequency bands during a second time interval subsequent to said first time interval; and
(iv) receiving a second incoming signal portion over the first one of said at least two distinct frequency bands during said second time interval.

2. The method of claim 1 wherein said step of transmitting said second outgoing signal portion during said second time interval comprises transmitting said second outgoing signal portion with one or more transmission characteristics based at least in part on one or more received characteristics determined based on said first incoming signal portion received during said first time interval, wherein said one or more transmission characteristics include one or more signal phases and one or more signal amplitudes.

3. The method of claim 2 wherein said steps of (i) transmitting said first outgoing signal portion during said first time interval, (ii) receiving said first incoming signal portion during said first time interval, (iii) transmitting said second outgoing signal portion during said second time interval, and (iv) receiving said second incoming signal portion during said second time interval, are each performed with use of a plurality of antennas, wherein said step of transmitting said second outgoing signal portion during said second time interval comprises using coherent beam forming to send data to multiple locations with use of said plurality of antennas and wherein said step of receiving said second incoming signal portion during said second time interval comprises using antenna diversity to receive data from multiple locations with use of said plurality of antennas.

4. The method of claim 1 wherein said method is performed by a wireless base station, wherein said steps of (i) transmitting said first outgoing signal portion during said first time interval and (iii) transmitting said second outgoing signal portion during said second time interval each comprise transmitting said corresponding outgoing signal portions to one or more mobile communication devices, and wherein said steps of (ii) receiving said first incoming signal portion during said first time interval and (iv) receiving said second incoming signal portion during said second time interval each comprise receiving said corresponding incoming signal portions from one or more mobile communication devices.

5. The method of claim 1 wherein said method is performed by a mobile communication device, wherein said steps of (i) transmitting said first outgoing signal portion during said first time interval and (iii) transmitting said second outgoing signal portion during said second time interval each comprise transmitting said corresponding outgoing signal portions to a wireless base station, and wherein said steps of (ii) receiving said first incoming signal portion during said first time interval and (iv) receiving said second incoming signal portion during said second time interval each comprise receiving said corresponding incoming signal portions from a wireless base station.

6. The method of claim 1 further comprising the steps of:
(v) transmitting a third outgoing signal portion over the first one of said at least two distinct frequency bands during a third time interval subsequent to said second time interval; and
(vi) receiving a third incoming signal portion over the second one of said at least two distinct frequency bands during said third time interval, and wherein the method further comprises the step of alternating between:
(a) transmitting an outgoing signal portion over the first one of said at least two distinct frequency bands while receiving an incoming signal portion over the second one of said at least two distinct frequency bands, and
(b) transmitting an outgoing signal portion over the second one of said at least two distinct frequency bands while receiving an incoming signal portion over the first one of said at least two distinct frequency bands,
until said bidirectional wireless communication is complete.

7. The method of claim 1 wherein said bidirectional wireless communication is performed with use of three distinct frequency bands, and wherein the method comprises the steps of transmitting corresponding outgoing signal portions over each one of said three distinct frequency bands in turn, simultaneous with receiving a corresponding incoming signal portion over a different one of said three distinct frequency bands, and further simultaneous with performing a switch of functionality between receiving and transmitting or between transmitting and receiving for a third one of said three distinct frequency bands.

8. The method of claim 1 wherein said second incoming signal portion comprises feedback information based on a receipt of said second outgoing signal portion, and wherein said second outgoing signal portion is at least in part based on said feedback information.

9. The method of claim 8 wherein said second incoming signal portion and said second outgoing signal portion comprise an ARQ scheme.

10. An apparatus for performing bidirectional wireless communication with use of at least two distinct frequency bands, the apparatus comprising:
(i) a signal transmitter adapted to transmit a first outgoing signal portion over a first one of said at least two distinct frequency bands during a first time interval;
(ii) a signal receiver adapted to receive a first incoming signal portion over a second one of said at least two distinct frequency bands during said first time interval;
(iii) a signal transmitter adapted to transmit a second outgoing signal portion over the second one of said at least two distinct frequency bands during a second time interval subsequent to said first time interval; and
(iv) a signal receiver adapted to receive a second incoming signal portion over the first one of said at least two distinct frequency bands during said second time interval.
